# EUROPÄISCHE PATENTSCHRIFT

(11) **EP 0 217 387 B1**
(45) Veröffentlichungstag und Bekanntmachung des Hinweises auf die Patenterteilung: **23.03.1994**
(21) Anmeldenummer: 86113542.4
(22) Anmeldetag: 01.10.1986
(51) Int. Cl.: A01C 5/06

(54) **Schar für eine Sämaschine**
Drill coulter for a seed drill
Soc de semoir

(30) Priorität: 02.10.1985 DE 3535211
(43) Veröffentlichungstag der Anmeldung: 08.04.1987
(73) Patentinhaber: Amazonen-Werke H. Dreyer GmbH & Co. KG, D-49205 Hasbergen (DE)
(72) Erfinder: Volbert, Franz-J., W-2800 Bremen (DE)

(56) Entgegenhaltungen:
- EP-A- 0 131 763
- EP-A- 0 183 203
- EP-A- 0 200 967
- DE-A- 1 582 064
- DE-A- 2 735 902
- FR-A- 1 271 425
- FR-A- 2 045 336
- FR-A- 2 082 196
- GB-A- 2 104 762
- US-A- 1 574 955
- US-A- 1 735 597

## Beschreibung

Die Erfindung betrifft ein Schar nach dem Oberbegriff des Anspruches 1.

Bei einem maschinellen Ausbringen von Saatgut ist es bekanntlich erforderlich, Rillen zur Aufnahme des Saatgutes in den zu besäenden Boden einzubringen, wobei dieses mit üblichen Sä- bzw. Drillmaschinen nur dann möglich ist, wenn ein sauberes Saatbett vorliegt, d. h. wenn der zu besäende Boden vorher durch Pflügen, Fräsen und/oder ähnliche Bearbeitungsvorgänge vorbereitet worden ist.

Eine solche Vorbereitung ist entsprechend arbeits- und damit kostenaufwendig und bei verschiedenen Einsatzfällen gar nicht möglich. Ein solcher Fall liegt beispielsweise dann vor, wenn Grünland mit sogenannter Grasdirektsaat im Wege einer Nachsaat eingesät werden soll, oder wenn schwer tragfähige Böden vorliegen, wie dieses beispielsweise bei moorigen Böden und den Bodenverhältnissen in zahlreichen Entwicklungsländern der Fall ist.

Aus der älteren EP-A-183 203, der älteren EP-A-200 967 sowie der GB-A-2 104 762 sind gattungsgemäße Säschare bekannt, die nicht nur eine Särille in den Boden einschneiden, sondern diesen auch durch Hebeschare lockern, doch sind diese bekannte Schare nicht unterschiedlichsten Bodenbedingungen anpaßbar, um auch gerade bei schwierigen Böden eine einwandfreie Einsaat zu gewährleisten, wie dieses Aufgabe der vorliegenden Erfindung ist.

Die Lösung dieser Aufgabe erfolgt durch die kennzeichnenden Merkmale des Anspruches 1.

Da der Anstellwinkel der Schneidklinge, der im allgemeinen zwischen etwa 15 und 50^{o} liegt (und zwar bevorzugt im Bereich der flacheren Winkel), zwecks optimaler Anpassung an die jeweiligen Bodenverhältnisse einstellbar ist, und auch die relative Orientierung des Rillenziehkörpers zum Schargehäuse bevorzugt einstellbar ausgebildet ist, um die Eindringtiefe der Schneide des Rillenziehkörpers zwecks Vorgabe der Ablagetiefe des Saatgutes variabel vorgeben zu können, ergiebt sich bereits insoweit eine hervorragende Anpaßbarkeit an unterschiedlichste Verhältnisse, wobei durch den die Schneide des Rillenziehkörpers nach unten überlappenden Räumansatz zugleich für eine relativ hohe Standzeit Sorge getragen wird, da die Spur des Rillenziehkörpers vor dem Einschneiden der Rille von Steinen oder sonstigem in der Spur liegenden Gut geräumt wird. Zugleich wird durch den an der Rückseite des Schargehäuses angeordneten Andrückarm bzw. dessen Fuß die zuvor mit Saatgut versorgte Rille wieder verläßlich geschlossen, wobei auch insoweit eine Anpassung an die jeweiligen Bodenverhältnisse möglich ist, da die auf den Andruckfuß wirkende Andrückkraft ebenfalls einstellbar ist.

Bevorzugte Ausgestaltungen der vorliegenden Erfindung sind in den Unteransprüchen beschrieben.

Die Erfindung ist nachstehend an Ausführungsbeispielen unter Bezugnahme auf eine Zeichnung weiter erläutert. Es zeigt:
- Fig. 1: eine Seitenansicht einer Ausführungsform des erfindungsgemäßen Schars;
- Fig. 2: eine Draufsicht auf das Schar gemäß Fig. 1 in Richtung des Pfeiles II in Fig. 1 gesehen;
- Fig. 3: einen Schnitt durch die als Rillenziehkörper wirkende Schneidklinge des Schars gemäß der Fig. 1 und 2 in Richtung der Schnittlinie III-III in Fig. 1 gesehen;
- Fig. 4: eine seitliche Draufsicht von vorn auf die Schneidklinge des Schars gemäß den Fig. 1 und 3 in Richtung des Pfeiles IV in Fig. 1 gesehen;
- Fig. 5: eine entgegengesetzt gerichtete Ansicht auf die Schneidklinge in Richtung des Pfeiles V in Fig. 1, wobei im Gegensatz zu Fig. 4 noch der untere Endabschnitt des Schargehäuses dargestellt ist;

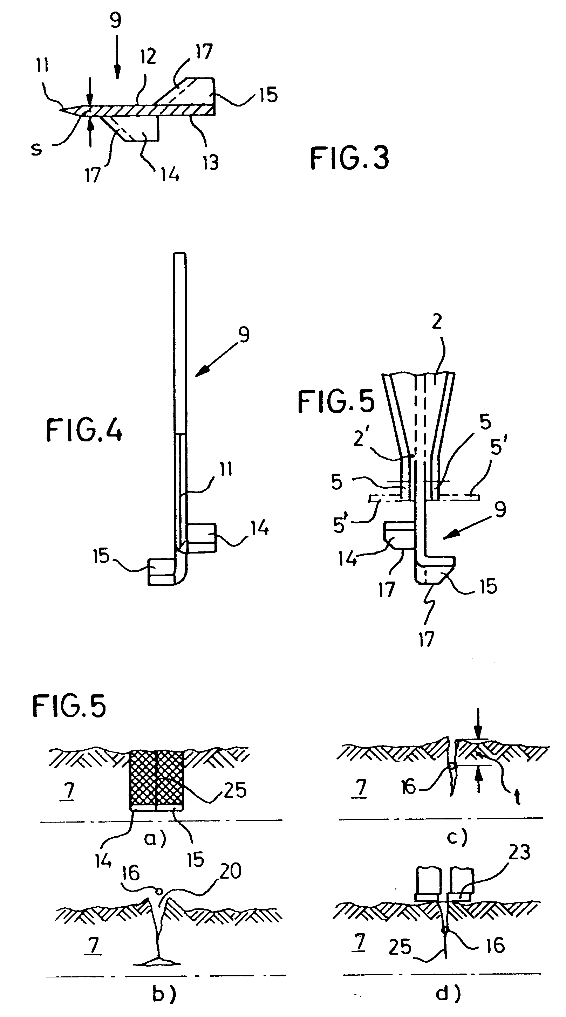

- Fig. 5: eine schematische Darstellung der Arbeits- bzw. Wirkungsweise des erfindungsgemäßen Schars anhand verschiedener Arbeitsstufen a) bis d); und

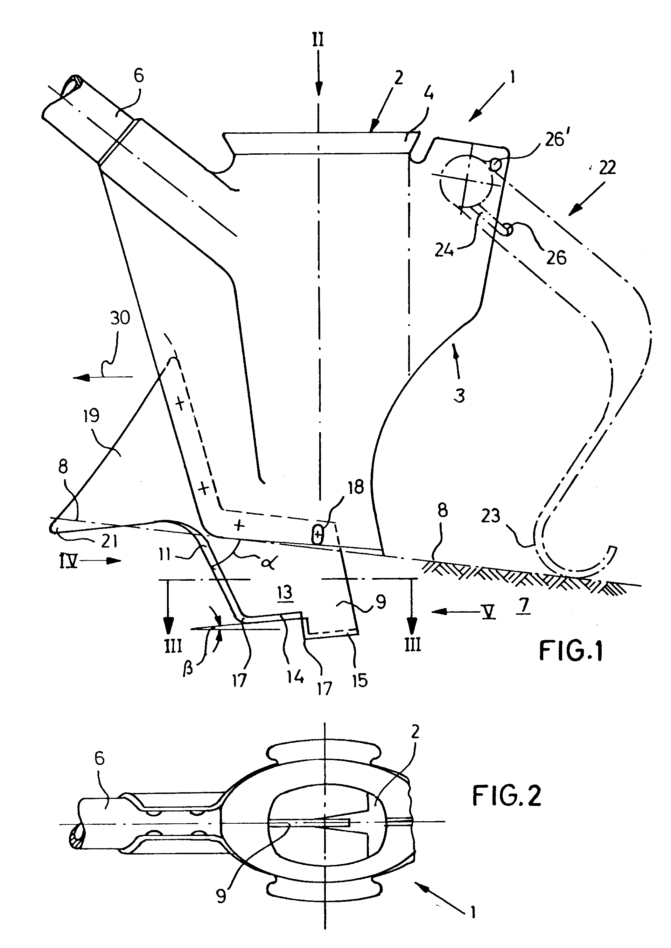

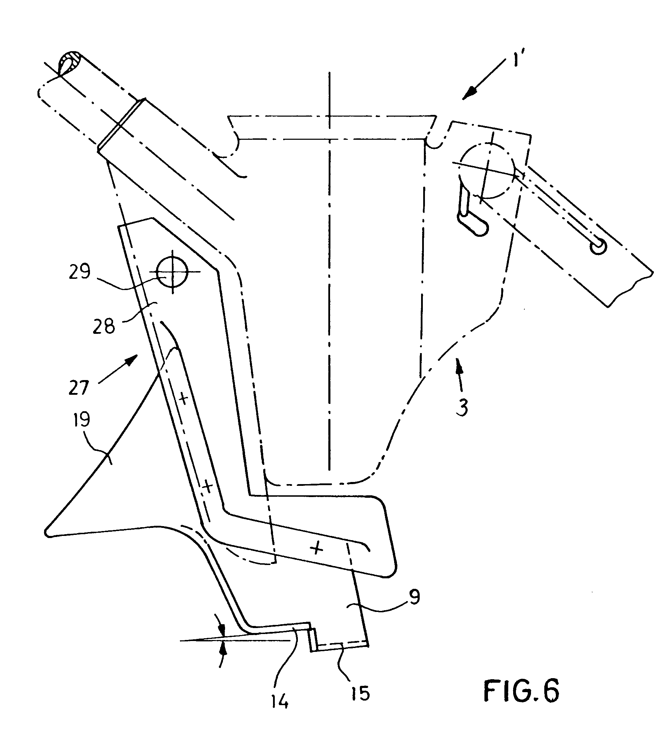

- Fig. 6: eine bauliche Variante gegenüber der Ausgestaltung gemäß Fig. 1, bei welcher das Schar als Vor- und Unterbau für ein mit Strichpunktlinien dargestelltes, konventionelles Schar ausgebildet ist.

Die Fig. 1 bis 5 zeigen ein im ganzen mit 1 bezeichnetes Schar für eine nicht dargestellte Sämaschine, welche eine dem Schar 1 vorgeordnete Dosiereinrichtung aufweist, mittels welcher über ein in der Zeichnung ebenfalls nicht dargestelltes Fallrohr Saatgut aus einem Saatvorrat in einen Saat-Führungskanal 2 zu geben ist, der sich im Gehäuse 3 des Schars 1 von oben nach unten erstreckt. Diese Erstreckung des Saat-Führungskanals 2 muß keineswegs senkrecht sein, wie dieses in der Zeichnung dargestellt ist, sondern kann ggf. auch im Winkel zur Vertikalen erfolgen, wobei sich dann das betreffende Fallrohr mit entsprechender Neigung an den Kragen 4 anschließt.

Bereits an dieser Stelle sei darauf verwiesen, daß eine Sämaschine bekanntlich nicht etwa nur ein derartiges Schar enthält, sondern daß an ihrem rückwärtigen, unteren Endabschnitt wenigstens eine Reihe derartiger Schare parallel nebeneinander quer zur Fahr- bzw. Vorschubrichtung angeordnet ist, und zwar entweder unmittelbar am Rahmen der Sämaschine oder aber an einer Scharschiene od.dgl.. Bei Einzelkorngeräten kann das Schar ggf. auch unmittelbar an der Dosiereinrichtung angeordnet sein. Die Befestigung der Schare 1 an der Sämaschine erfolgt bei dem dargestellten Ausführungsbeispeil mittels eines Haltearms 6.

Vom unteren Endabschnitt des Schargehäuses 3 erstreckt sich ein beim Säen begrenzt in den Boden 7 eindringender Rillenziehkörper 9 (die Oberseite des Bodens 7 ist in Fig. 1 mit einer strichpunktierten Linie 8 angedeutet) nach unten. Dieser Rillenziehkörper 9, der bei vergleichbaren konventionellen Scharen als etwa daumendicke Platte ausgebildet ist, die an ihrer Vorderkante abgerundet ist, besteht bei dem erfindungsgemäßen Schar 1 aus einer Schneidklinge konstanter Dicke s, wobei die Dicke s im Verhältnis zu vergleichbaren konventionellen Scharen relativ gering ist und lediglich 3 mm beträgt. Die vornliegende Schneidkante 11 der Schneidklinge 9 verläuft unter einem Winkel α zur Horizontalen (siehe strichpunktierte Linie 8), und zwar von oben nach unten in rückwärtiger Richtung geneigt.

An beiden Seiten 12 bzw. 13 steht ein Hebeschar 14 bzw. 15 vor, dessen rückwärtiger Endabschnitt höher liegt als sein vorderer Endabschnitt. Die Hebeschare 14, 15 sind eben ausgebildet und in der Draufsicht im wesentlichen rechtwinklig (siehe Fig. 3), wobei sie zum vorderen Ende hin abgeschrägt sind (siehe Fig. 3) und die Vorderkante jeweils als Schneidkante 17 ausgebildet ist.

Es ist erkennbar, daß die beiden Hebeschare 14, 15 in Längsrichtung zu der Schneidklinge 9 hintereinander liegen. Dieses beruht auf dem Umstand, daß sie integral mit der Schneidklinge 9 ausgebildet sind und die gleiche Dicke s wie die Schneidklinge 9 aufweisen, wobei diese Ausgestaltung besonders zweckmäßig ist, weil sich die Hebeschare 14, 15 auf diese Weise durch Einschneiden und Abkanten jeweils seitlich aus der Ebene der Schneidklinge 9 herausbiegen lassen.

Bezügiich der Schneidkante 11 der Schneidklinge 9 sei noch nachgetragen, daß sich diese über deren gesamte Vorderkante erstreckt, und daß die Schneidkante 11 im Querschnitt dreiecksförmig ausgebildet ist, wie dieses auf Fig. 3 erkennbar ist.

Die Relativstellung der Schneidklinge 9 zum Schargehäuse 3 ist einstellbar. Hierfür weist die Schneidklinge 9 ebenso wie der untere Randabschnitt des Schargehäuses 3 Langlöcher auf, durch welche im montierten Zustand Schrauben hindurchgeführt sind, die in Fig. 1 der besseren Übersicht halber nicht dargestellt, sondern lediglich durch Kreuze angedeutet sind. Wenn die Langlöcher 18 auch in ihrer Breite größer sind als die Schraubendurchmesser bzw. wenn stattdessen entsprechend große Bohrungen vorgesehen sind, so läßt sich mithin auch der Anstellwinkel α der Schneidklinge einstellen, wie dieses bevorzugt vorgesehen ist. Hierfür können ersichtlich auch noch andere Maßnahmen getroffen werden, als dieses beim Ausführungsbeispiel gemäß Fig. 1 der Fall ist.

Von der Vorderseite des Schargehäuses 3 steht ein Räumansatz 19 vor, der in seitlicher Draufsicht (siehe Fig. 1) im wesentlichen dreiecksförmig ausgebildet ist, wobei der vornliegende Eckabschnitt 21 das obere Ende der Schneidklinge 9 noch überlappt, da die Arbeitsweise gemäß der Darstellung in Fig. 1 so vorgesehen ist, daß der vordere Eckabschnitt 21 des Räumansatzes 19 noch geringförmig in den Boden eindringt, um eine optimale Räumung vornehmen zu können, bevor die Schneidkante 11 der Schneidklinge 9 den zur Rillenbildung vorgesehenen Schnitt in den Boden 7 einbringt.

Bei dem dargestellten Ausführungsbeispiel ist auch der Räumansatz 19 integral mit der Schneidklinge 9 ausgebildet, so daß der Räumansatz 19, die Schneidklinge 9 und die beiden Hebeschare 14 und 15 eine auswechselbare Einheit bilden, die ggf. zum Nachschleifen ausgebaut und durch eine entsprechende andere Einheit ersetzt werden kann bzw. nach vollständigem Verschleiß gegen ein entsprechendes Ersatzteil ausgetauscht werden kann. Es sei jedoch ausdrücklich darauf verwiesen, daß selbstverständlich eine baumäßig gesonderte bzw. getrennte Ausbildung und Anordnung des Räumansatzes zur Schneidklinge wie auch der Hebeschare 14, 15 zur Schneidklinge 9 denkbar ist, wie es grundsätzlich auch möglich ist, daß Räumansatz 19 und/oder Schneidklinge 9 und/oder Hebeschare 14, 15 integraler Bestandteil des Schargehäuses 3 sind, doch ist letzteres unzweckmäßig, weil dieses dann zu einem Verschleißteil werden würde, was anderenfalls nicht der Fall ist.

An der Rückseite des Schargehäuses 3 ist ein im ganzen mit 22 bezeichneter Andrückarm angelenkt. Der Andrückarm 22 besitzt einen Andrückfuß 23, der symmetrisch zur Schneidklinge 9 angeordnet ist und mittels einer Feder 24 selbsttätig nach unten zu drücken ist, deren Andrückkraft einstellbar ist. Die Feder 24 besteht aus einem Federdraht, der um die Gelenkachse des Andrückarms 22 aufgewickelt ist, wobei der eine Endabschnitt der Feder in eine Bohrung 26 im Andrückarm 22 und das andere Ende der Feder 24 in eine Bohrung 26' des Schargehäuses 3 greift.

Fig. 6 unterscheidet sich von der Ausgestaltung gemäß Fig. 1 dadurch, daß das im ganzen mit 1' bezeichnete Schar aus einem in Fig. 6 mit strichpunktierten Linien dargestellten konventionellen Schar sowie einem in der Art eines Mantels 27 ausgebildeten Teil besteht, welches im wesentlichen aus einer den Rillenziehkörper darstellenden Schneidklinge 9 mit Hebescharen 14 und 15 sowie einem Räumansatz 19 gemäß Fig. 1 sowie darüber hinaus einem im Querschnitt V-förmigen Gehäuse 28 besteht, welches auf das konventionelle Schar 1' in der Fig. 6 erkennbaren Weise aufgeschoben und mittels Schraubverbindungen befestigt ist, wobei in Fig. 6 lediglich eine Durchgangsbohrung 29 zur Aufnahme einer Schraube ersichtlich ist, die sich sowohl durch den Gehäusemantels 28 als auch das Gehäuse des konventionellen Schars 1' hindurch erstreckt.

Um eine sichere Einleitung des Saatgutes in die schlitzförmig gebildete, aufgrund der erfindungsgemäß erzielten "Aufklappwirkung" vorübergehend V-förmige, nach dem Durchfahren mit den Hebescharen 14, 15 sogleich wieder zusammenklappende Saatrille 20 zu erzielen, können bevorzugt an der Auslaßöffnung 2' des Saatführungskanals 2 Leitbleche 5, 5 angeordnet sein, die bevorzugt so angeordnet sind, daß sie sich im Betrieb wenigstens bis zum Untergrund erstrecken (ggf. in die vorübergehend gebildete V-förmige Saatrille 20 eintauchen). Damit wird sichergestellt, daß einzubringendes Saatgut nicht seitlich verstreut wird, was insbesondere auch durch seitlich einfallenden Wind anderenfalls begünstigt werden könnte.

In weiterer Ausgestaltung der vorliegenden Erfindung können die Leitbleche 5 an ihrem unteren Endabschnitt mit horizontal verlaufenden Flanschen 5' versehen sein, die dann mithin zugleich eine Tiefenbegrenzung des Schars bewirken und ggf. gleichzeitig auch die Aufgabe des Andrückarms 22 übernehmen können, so daß dieser ggf. entbehrlich ist. Derartige Flansche 5' sind mithin nicht notwendigerweise integral mit den Leitblechen 5 ausgebildet, wie dieses in Fig. 5 der Zeichnung angedeutet ist, sondern können auch als gesonderte Bauteile an den Leitblechen 5 angeordnet und bevorzugt höhenverstellbar sein.

Die Wirkungsweise des Schars ist wie folgt (s. Fig. 5):
Beim Arbeiten der Sämaschine wird das Schar 1 zusammen mit den parallel hierzu quer zur Vorschubrichtung in Reihe angeordneten weiteren Scharen 1 in Richtung des Pfeiles 30 in Fig.1 vorwärts bewegt. Dabei dringt die als Rillenziehkörper wirkende Schneidklinge 9 in den Boden 7 ein, nachdem die Spurrille zuvor von dem Räumansatz 19 bzw. dessen vorderen Eckabschnitt 21 geräumt ist, und bringt einen Schnitt 25 in den Boden 7 ein (siehe Fig. 5a). Da die Schneidklinge 9 lediglich eine Breite von 3 mm aufweist, wäre ein solcher Schnitt 25 zur Einbringung der Einsaat in den Boden 7 ersichtlich ungeeignet. Aufgrund der erfindungsgemäßen Ausgestaltung des Schars 1 kommen indes unmittelbar nach Schaffung des Schnittes 25 die Hebeschare 14 und 15 zur Wirkung, indem sie aufgrund ihrer Anstellung zur Horizontalen um den Winkel β den in Fig. 5a kreuzschraffiert dargestellten Bodenbereich gemäß Fig. 5b etwas anheben bzw. jeweils zur Seite leicht wegkippen, so daß eine im Querschnitt im wesentlichen V-förmige Saatrille 20 entsteht, wie dieses zur Einbringung des Saatgutes erforderlich ist. Das Saatgut gelangt - je nach den Gegebenheiten, die von der Dosiervorrichtung vorgegeben werden - entweder in Einzelkornablage oder in kontinuierlich dosierter Menge aus der nicht dargestellten Dosiervorrichtung durch ein nicht dargestelltes Fallrohr in den Saat-Führungskanal 2 und aus diesem in die Saatrille 20, wobei die Ablagetiefe t (siehe Fig. 5c) durch die Einstellung der Tiefe des Schnittes 25 und die relative Höhe der Hebeschare 14, 15 einstellbar ist. Dabei wird ein in die Saatrille 20 geführtes Saatkorn 16 in dem durch den Schnitt geschaffenen Spalt eingeklemmt und damit definiert gehalten, da die beiden in Fig. 5a kreuzschraffiert dargestellten Bodenabschnitte über den Hebescharen 14, 15 bereits von sich aus wieder im wesentlichen in ihren Ausgangszustand zurückfallen, wenn die Hebeschare 14, 15 die betreffende Stelle verlassen haben. Um die Saatrille 20 völlig zu schließen, drückt letzlich beim Weiterfahren noch der Andrückfuß 23 des Andrückarms 22 von oben her auf den Boden 7, so daß die vorübergehend geschaffene Saatrille 20 danach wieder praktisch völlig geschlossen ist.

Wie bereits weiter oben erwähnt worden ist, ist diese Arbeitsweise mit dem erfindungsgemäßen Schar auch auf schwierigen Böden, wie bspw. Grünland ohne Schwierigkeiten möglich. Auch auf anderen Böden kann das Saatgut mit den erfindungsgemäßen Scharen in der beschriebenen Weise eingebracht werden, ohne daß es hierfür einer vorherigen Schaffung eines sauberen Saatbettes durch Pflügen od.dgl. bedarf.

## Patentansprüche

1. Schar (1; 1') für eine Sämaschine, mit einem an der Sämaschine zu befestigenden Schargehäuse (3), welches von oben nach unten von einem Saat-Führungskanal (2) durchsetzt ist; einem in der vertikalen Symmetrieebene vom unteren Endabschnitt des Schargehäuses (3) vorstehenden, beim Säen in den Boden eindringenden, plattenförmigen Rillenziehkörper (9) mit relativ geringer, im wesentlichen konstanter Dicke, dessen Vorderkante im spitzen Winkel (α) zur Horizontalen verläuft; und von den Seiten (12, 13) des Rillenziehkörpers (9) vorstehenden Hebescharen (14, 15), deren rückwärtiger Endabschnitt höher liegt als ihr vorderer Endabschnitt, gekennzeichnet durch die Kombination der Merkmale, daß der Anstellwinkel (α) und/oder die Eindringtiefe des Rillenziehkörpers (9) einstellbar sind; daß die Vorderkanten des Rillenziehkörpers (9) und der Hebeschare (14, 15) mit einer Schneide (11 bzw. 17) versehen sind; daß an der Vorderseite des Schargehäuses (3) ein Räumansatz (19) angeordnet ist, dessen vorn liegender Abschnitt (21) sich bis über das obere Ende der Schneide (11) des Rillenziehkörpers (9) nach unten erstreckt; und daß an der Rückseite des Schargehäuses (3) ein bzgl. seiner Andrückkraft einstellbarer Andrückarm (22) angelenkt ist, dessen Andrückfuß (23) symmetrisch zum Rillenziehkörper (9) angeordnet ist.

2. Schar nach Anspruch 1, dadurch gekennzeichnet, daß der Anstellwinkel (α) der Schneide (11) des Rillenziehkörpers (9) zur Horizontalen zwischen 15^{o} und 50^{o} einstellbar ist.

3. Schar nach Anspruch 1 oder 2, dadurch gekennzeichnet, daß die Dicke (s) des Rillenziehkörpers (9) ca. 1,5 bis 4 mm, vorzugsweise ca. 3 mm, beträgt.

4. Schar nach einem oder mehreren der vorhergehenden Ansprüche, dadurch gekennzeichnet, daß der Räumansatz (19) integral mit dem Rillenziehkörper (9) ausgebildet ist.

5. Schar nach einem oder mehreren der vorhergehenden Ansprüche, dadurch gekennzeichnet, daß die Hebeschare (14, 15) integral mit dem Rillenziehkörper (9) ausgebildet sind.

6. Schar nach einem oder mehreren der vorhergehenden Ansprüche, insbesondere nach Anspruch 5, dadurch gekennzeichnet, daß die Hebeschare (14, 15) in Längsrichtung (30) des Rillenziehkörpers (9) hintereinander liegen.

7. Schar nach einem oder mehreren der vorhergehenden Ansprüche, dadurch gekennzeichnet, daß der Andrückarm (22) mittels Federkraft (24) selbsttätig nach unten zu drücken ist.

8. Schar nach einem oder mehreren der vorhergehenden Ansprüche, dadurch gekennzeichnet, daß an der Auslaßöffnung (2') des Saat-Führungskanals (2) Leitbleche (5) angeordnet sind, die sich wenigstens bis zur Unterseite des Schargehäuses (3) erstrecken.

9. Schar nach Anspruch 8, dadurch gekennzeichnet, daß die Leitbleche (5) an ihrem unteren Endabschnitt mit im wesentlichen horizontal verlaufenden Flanschen (5') versehen sind.

10. Schar nach Anspruch 9, dadurch gekennzeichnet, daß die Flansche (5') höhenverstellbar ausgebildet sind.

## Claims

1. Coulter (1; 1') for a seed drill, including a coulter housing (3), which is to be mounted on the seed drill and has a seed guide duct (2) extending therethrough from top to bottom; a plate-like furrow-digging member (9), which protrudes in the vertical plane of symmetry from the lower end portion of the coulter housing (3) and penetrates the ground during sowing, said member having a relatively small thickness, which is substantially constant, and having a front edge which extends at an acute angle (α) relative to the horizontal; and lifting coulters (14, 15), which protrude from the sides (12, 13) of the furrow-digging member (9) and have a rear end portion which lies higher than their front end portion, characterised by the combination of the features, that the angle of attack (α) and/or the depth of penetration of the furrow-digging member (9) are adjustable; that the front edges of the furrow-digging member (9) and of the lifting coulters (14, 15) are provided with a cutting edge (11 and 17 respectively); that an obstruction-clearing extension (19) is disposed at the front end of the coulter housing (3), the front portion (21) of said extension extending downwardly beyond the upper end of the cutting edge (11) of the furrow-digging member (9); and that a pressing arm (22), which is adjustable in respect of its pressing force, is pivotally mounted on the rear end of the coulter housing (3), the pressing foot (23) of said arm being disposed symmetrically relative to the furrow-digging member (9).

2. Coulter according to claim 1, characterised in that the angle of attack (α) of the cutting edge (11) of the furrow-digging member (9) is adjustable between 15° and 50° relative to the horizontal.

3. Coulter according to claim 1 or 2, characterised in that the thickness (s) of the furrow-digging member (9) is approx. 1.5 to 4 mm, preferably approx. 3 mm.

4. Coulter according to one or more of the preceding claims, characterised in that the obstruction-clearing extension (19) is formed integrally with the furrow-digging member (9).

5. Coulter according to one or more of the preceding claims, characterised in that the lifting coulters (14, 15) are formed integrally with the furrow-digging member (9).

6. Coulter according to one or more of the preceding claims, more especially according to claim 5, characterised in that the lifting coulters (14, 15) lie behind each other in the longitudinal direction (30) of the furrow-digging member (9).

7. Coulter according to one or more of the preceding claims, characterised in that the pressing arm (22) is to be pressed automatically downwardly by means of the force of spring (24).

8. Coulter according to one or more of the preceding claims, characterised in that baffle plates (5) are disposed at the outlet aperture (2') of the seed guide duct (2) and extend to at least the underside of the coulter housing (3).

9. Coulter according to claim 8, characterised in that the baffle plates (5) are provided, at their lower end portion, with flanges (5') which extend substantially horizontally.

10. Coulter according to claim 9, characterised in that the flanges (5') are adapted to be vertically adjustable.

## Revendications

1. Soc (1, 1') de semoir comportant un carter de soc (3) qui se fixe sur le semoir, ce carter étant traversé de haut en bas par un canal de guidage de semence (2) ; un organe pour tracer des sillons (9) en forme de plaque d'épaisseur relativement faible, essentiellement constante, dont l'arête avant fait un angle aigu (α) par rapport à la direction horizontale, cet organe (9) étant en saillie dans le plan de symétrie vertical par rapport au segment d'extrémité inférieur du carter (3), pour pénétrer dans le sol pour l'ensemencement ; et des socs de relevage (14, 15) en saillie des côtés (12, 13) de l'organe (9) pour tracer les sillons, socs dont le segment d'extrémité arrière est situé plus haut que le segment d'extrémité avant, soc caractérisé par la combinaison des caractéristiques :
- l'angle d'attaque (α) et/ou la profondeur de pénétration de l'organe traçant les sillons (9) sont réglables,
- l'arête avant de l'organe traçant les sillons (9) et des socs de relevage (14, 15) sont munies d'une arête (11, 17),
- sur le côté avant du carter (3) du soc se trouve un déflecteur (19) dont le segment (21) situé à l'avant descend jusque par-dessus l'extrémité supérieure de l'arête (11) de l'organe (9) traçant les sillons et
- sur le côté arrière du carter (3) est articulé un bras applicateur (22) dont la force d'application est réglable, et dont le pied (23) est symétrique par rapport à l'organe (9) traçant les sillons.

2. Soc selon la revendication 1, caractérisé en ce que l'angle d'attaque (α) de l'arête (11) de l'organe traçant les sillons (9) est réglable par rapport à la direction horizontale entre 15° et 50°.

3. Soc selon la revendication 1 ou 2, caractérisé en ce que l'épaisseur (s) de l'organe traçant les sillons (9) est d'environ 1,5 à 4 mm et de préférence de l'ordre de 3 mm.

4. Soc selon une ou plusieurs des revendications précédentes, caractérisé en ce que le déflecteur (19) fait corps avec l'organe traçant les sillons (9).

5. Soc selon une ou plusieurs des revendications précédentes, caractérisé en ce que les socs de relevage (14, 15) font corps avec l'organe traçant les sillons (9).

6. Soc selon une ou plusieurs des revendications précédentes, notamment la revendication 5, caractérisé en ce que les socs de relevage (14, 15) sont placés l'un derrière l'autre dans la direction longitudinale (30) de l'organe traçant les sillons (9).

7. Soc selon une ou plusieurs des revendications précédentes, caractérisé en ce que le bras applicateur (22) est enfoncé automatiquement par la force d'un ressort (24).

8. Soc selon ou plusieurs des revendications précédentes, caractérisé par des tôles de guidage (5) prévues au niveau de l'orifice de sortie (2') du canal de guidage de semence (2), ces tôles s'étendant au moins jusqu'au niveau de la face inférieure du carter de soc (3).

9. Soc selon la revendication 8, caractérisé en ce que les tôles de guidage (5) sont munies de brides (5') essentiellement horizontales, au niveau de leur segment d'extrémité inférieur.

10. Soc selon la revendication 9, caractérisé en ce que les brides (5') sont réglables en hauteur.
